# EUROPÄISCHE PATENTSCHRIFT

(11) **EP 1 837 575 B1**
(45) Veröffentlichungstag und Bekanntmachung des Hinweises auf die Patenterteilung: **05.01.2011**
(21) Anmeldenummer: 06405122.0
(22) Anmeldetag: 20.03.2006
(51) Int. Cl.: F16L 15/04, F16L 21/03, F16L 13/14, F16J 15/06

(54) **Anschlussstück für Rohre mit einer quellbaren Dichtung**
Fitting for pipes with a swellable sealing
Raccord pour des tuyaux avec un joint d'étanchéité gonflable

(43) Veröffentlichungstag der Anmeldung: 26.09.2007
(60) Teilanmeldung: 10002674.9
(73) Patentinhaber: R. Nussbaum AG, 4601 Olten (CH)
(72) Erfinder: Zeiter, Patrik, 4853 Riken (CH); Bobst, Urs, 4703 Kestenholz (CH)
(74) Vertreter: Rüfenacht, Philipp Michael

(56) Entgegenhaltungen:
- WO-A-91/03674
- DE-U1- 20 305 353
- US-A1- 2004 104 575

## Beschreibung

Die Erfindung betrifft eine Schraubverbindung umfassend einen ersten rohrförmigen Teil eines Anschlussstücks und einen zweiten rohrförmigen Teil eines Wasser oder wässrige Lösungen führenden Leitungssystems, wobei der erste rohrförmige Tell mit dem zweiten rohrförmigen Teil dicht verbindbar ist und wobei das erste rohrförmige Teil ein innengewinde oder ein Aussengewinde aufweist, so dass das zweite rohrförmige Teil mit entsprechendem Aussengewinde bzw. Innengewinde mit dem ersten rohrförmigen Teil verschraubbar ist. Die Erfindung betrifft weiter ein Verfahren zum dichten Verbinden eines ersten rohrförmigen Teils mit einem zweiten rohrförmigen Teil eines Wasser oder wässrige Lösungen führenden Leitungssystems.

### Stand der Technik

Wasser oder wässrige Lösungen führende Leitungssysteme sind zumeist aus mehreren Elementen (Rohre, Verbindungsstücke bzw. Fittings, Armaturen etc.) aufgebaut. Diese Elemente weisen üblicherweise Anschlussstücke mit rohrförmigen Teilen auf, wobei die rohrförmigen Teile mit entsprechenden rohrförmigen Teilen der Anschlussstücke benachbarter Elemente verbunden werden können. Damit die Verbindung dicht ist, d. h. damit ein Austreten der im Leitungssystem geführten Flüssigkeit bei den Verbindungsstellen verhindert wird, sind letztere mit Dichtungen versehen. Bei vielen Leitungssystemen, z. B. für die Wasserversorgung (inkl. Hausverteilung), ist eine lange Lebensdauer gefordert, d. h. die Verbindungen müssen über einen langen Zeitraum (z. B. 50 Jahre) dicht bleiben.

Als Dichtungen üblich sind beispielsweise elastische O-Ringe aus einem kautschukartigen Material (z. B. EPDM), welche in Ringnuten an einem der rohrförmigen Teile aufgenommen sind. Die O-Ringe werden durch den Druck des im Leitungssystem geführten Mediums innerhalb der Nut derart bewegt, dass sie gegen das Gegenstück abdichten; ohne Mediendruck ist die Abdichtung nur teilweise vorhanden. O-Ringe verlieren zudem mit der Zeit ihre Elastizität, so dass die Dichtwirkung nachlässt.

Für Schraubverbindungen sind O-Ringe wenig geeignet, weil sie beim Verschrauben durch das Gewinde des Gegenstücks beschädigt würden. Rohrgewinde sind üblicherweise nach ISO 7-1 im Gewinde dichtend ausgeführt, indem Innengewinde zylindrisch und Aussengewinde kegelig (konisch) gefertigt sind. Selbst bei derartigen Schraubverbindungen sind für eine vollständige Abdichtung aber in der Regel im Bereich der zusammenwirkenden Gewinde abdichtende und gegebenenfalls aufquellende Materialien wie Hanf, spezielle Dichtungspasten oder PTFE-Bänder notwendig, eine derartige Gewindebeschichtung geht beispielsweise aus der GB 2 060 801 A (Rubinetterie A Giacomini SpA) hervor.

Bei der Montage von mit Gewindeverbindungen versehenen Armaturen, Fittings und Rohren ist es oft notwendig, dass nach dem ersten Zusammenschrauben benachbarter Elemente die Verbindung durch Zurückdrehen wieder etwas gelöst werden muss. Gemäss der Norm DIN 30660 muss die Schraubverbindung auch nach einem Zurückdrehen von 45° noch dicht sein. In der Praxis werden aber Schraubverbindungen oft um einen Winkel von 180° oder gar mehr zurückgedreht. Die genannten Gewindebeschichtungen oder andere Dichtmaterialien im Gewindebereich können zwar die genannte DIN 30600 erfüllen, ein Zurückdrehen von wesentlich mehr als 45° führt aber oft zu Undichtigkeiten, weil durch das Zurückdrehen die gleichmässige Verteilung des Dichtmaterials im Gewindeabschnitt verloren geht. Die Undichtigkeiten wirken sich primär bei Leitungssystemen aus, in welchen das Wasser bzw. die wässrige Lösung mit Druck geführt wird.

Neben den aufquellenden Dichtungen im Gewindebereich sind auch andere aufquellende Dichtungen bekannt. Die US 6,328,310 B1 (Acacia Kakou) zeigt beispielsweise ein Verfahren zum Verhindern von Lecks in einem Leitungssystem, in dessen Rahmen eine Ringdichtung aus einem hohlen, wasserabsorbierenden, aufquellenden Gummistück im Kontaktbereich zweier zu verbindender rohrförmiger Teile angeordnet wird. Anschliessend wird durch ein Ventil oder mittels einer Hohlnadel Druckluft in den Hohlraum des Gummistücks eingebracht, um eine erste Abdichtung zu erreichen. Sobald Wasser in das Leitungssystem eingelassen wird, quillt das Gummistück auf und dichtet somit unabhängig von der Druckluft die beiden Teile gegeneinander ab.

Durch das Einbringen der Druckluft kann eine gute Abdichtung unmittelbar nach der Montage, vor dem erstmaligen Einbringen von Wasser, erreicht werden. Nach dem Aufquellen übt die Dichtung einen permanenten, nicht nachlassenden Druck auf das Gegenstück aus und gewährleistet somit eine dauerhafte Abdichtung. Allerdings ist die Montage durch den zusätzlichen Schritt des Einbringens von Druckluft recht kompliziert und zeitaufwändig.

Die DE 196 17 437 A1 (Hermann Mücher GmbH) zeigt eine elastomere Ringraumdichtung für einen Grundkörper, der mit seiner Mantelfläche in einem Bohrloch liegt und mit seiner Innenöffnung das Ende eines Rohrs aufnimmt. Derartige Grundkörper werden insbesondere im Abwasserbereich eingesetzt. Der Grundkörper weist auf seiner inneren oder äusseren Mantelfläche zusätzliche Dichtungen aus einem quellbaren Werkstoff auf. Diese können in eine Ringnut eingesetzt sein und bewirken beim Kontakt mit Wasser durch ihr Aufquellen eine zusätzliche, sichere Abdichtung.

Die Dichtungen sind zusätzlich zu herkömmlichen Dichtungen an einem der zu verbindenden Rohrteile angeordnet, der Herstellungsaufwand und die Kosten für das entsprechende Rohrteil sind somit verglichen mit üblichen Bauelementen erhöht. Die primäre Abdichtung erfolgt durch die üblichen Dichtungen, die zusätzlichen, aufquellenden Dichtungen nehmen eine Sicherheitsfunktion beim Versagen der üblichen Dichtungen wahr. Die beschriebene Anordnung ist zudem primär für Systeme bestimmt, in welchen das Wasser drucklos geführt wird; die entsprechenden Anforderungen sind somit geringer als beispielsweise bei Leitungen für die Wasserversorgung.

Die WO 99/23401 A1 (Fraunhofer-Gesellschaft) betrifft eine Dichtung, welche durch ein biologisch nicht abbaubares, durch Flüssigkeitsaufnahme quellfähiges Polymer gebildet wird, welches in einen die beiden gegeneinander abzudichtenden Systeme trennenden Raum aufgenommen ist. Um die Montage zu erleichtern, kann das Polymer in ein ringförmiges, elastisch dehnbares, poröses Material eingeschlossen werden. Diese Ringdichtung wird dann zusätzlich zu einer normalen Gummidichtung eingesetzt. Im Normalfall wird die gesamte Dichtfunktion mit der konventionellen Gummidichtung aufrechterhalten. Erst wenn diese normale Dichtung versagt und Flüssigkeit zur dahinter liegenden Ringdichtung gelangt, quillt diese auf und dichtet das System ab. Alternativ ist eine Anordnung offenbart, bei welcher auf eine konventionelle Dichtung verzichtet wird und bei welcher das Polymer von aussen her in einen die beiden gegeneinander abzudichtenden Systeme trennenden Raum eingefüllt wird, bis es diesen vollständig ausfüllt und somit eine gewisse erste Dichtwirkung entfalten kann. Die endgültige und dauerhafte Abdichtung erfolgt dann beim Erstkontakt mit der in den Systemen geführten Flüssigkeit.

Bei der Ausführung mit der zusätzlichen, redundanten Dichtung ist wiederum ein erhöhter Herstellungsaufwand vonnöten. Die zweite Ausführung mit dem einzufüllenden Polymer bedingt eine komplizierte und zeitaufwändige Montage.

Die WO 03/036139 A1 (FITR - Gesellschaft für Innovation im Tief- und Rohrleitungsbau Weimar mbH) zeigt ein selbstdichtendes System für flüssige Medien aufnehmende oder führende Rohrverbindungen, insbesondere eines Kanalrohrsystems, wobei die Dichtungen quellfähige Eigenschaften aufweisen. Das Dichtungsmaterial besteht aus einer insgesamt quellfähigen, homogenen Elastomermischung, wobei der quellfähige Bestandteil in die Elastomermatrix eingebettet ist und die quellfähigen Bestandteile zellulosische und/oder proteinische Fasern und/oder Feuchtigkeit sorbierende Polymere und/oder hochquellfähige Tonmineralien oder Tongranulate sind. Zum Abdichten der Verbindungsstelle kann der Quellvorgang der Dichtung während oder nach der Herstellung der Rohrverbindung eingeleitet werden.

Die US 2004/0104575, die den nächstliegenden Stand der Technik beschreibt, betrifft eine ausweitbare röhrenförmige Kupplung mit ersten und zweiten Gewindeabschnitten, welche jeweils zusammenwirkende Zähne aufweisen. Einige der Zähne greifen ineinander ein, während zwischen den restlichen Zähnen Lücken gebildet sind. Ein verformbares Dichtmaterial kann in die Lücken zwischen den Zähnen eingebracht werden; dieses kann aktiviert werden, wenn die Kupplung ausgeweitet wird, z. B. durch Zusammenpressen zwischen angrenzenden Flanken der zusammenwirkenden Zähne. In einem der Kupplungselemente kann auch eine Nut zur Aufnahme eines O-Rings ausgebildet sein, wobei dieser wiederum während des Aufweitprozesses aktiviert wird. Die erwähnten Dichtungselemente können aus einem aufquellbaren Stoff hergestellt sein, welcher beim Kontakt mit Kohlenwasserstoffen oder Wasser aufquillt; wenn nach dem Aufweiten noch eine undichte Stelle besteht, gelangt das geführte Fluid zur aufquellbaren Dichtung, worauf sich diese ausdehnt und das Leck verschliesst.

Das Einleiten des Quellvorgangs während oder nach der Herstellung der Rohrverbindung, welches notwendig ist, um eine dichte Verbindung zu erhalten, ist ein zusätzlicher Schritt beim Herstellen einer Verbindung und vergrössert somit den Montageaufwand bei Leitungssystemen. Wird dieser Schritt unterlassen, kann es bei der ersten Inbetriebnahme der Verbindungen gemäss dem Stand der Technik zu Lecks kommen.

### Darstellung der Erfindung

Aufgabe der Erfindung ist es, eine dem eingangs genannten technischen Gebiet zugehörende Schraubverbindung zu schaffen, welche dauerhaft und dicht ist und welche einfach und schnell herstellbar ist.

Die Lösung der Aufgabe ist durch die Merkmale des Anspruchs 1 definiert. Gemäss der Erfindung ist im ersten rohrförmigen Teil an einer in verbundenem Zustand das zweite rohrförmige Teil kontaktierenden Fläche eine Ringnut ausgespart, in welche eine Ringdichtung aus einem wasserquellbaren Dichtstoff eingebracht ist, wobei ein Boden der Ringnut tiefer liegt als ein Grund des Gewindes des ersten rohrförmigen Teils. Die Ringdichtung ragt in unbefestigtem Zustand der beiden rohrförmigen Teile über den Grund des Gewindes des ersten rohrförmigen Teils hinaus, und das Gewinde des zweiten rohrförmigen Teils ist derart angeordnet und ausgebildet, dass es beim Befestigen der beiden rohrförmigen Teile aneinander in die Ringdichtung einschneidet. Das Anschlussstück ist derart ausgebildet, dass in nicht aufgequelltem Zustand der Dichtung das zweite rohrförmige Teil am ersten rohrförmigen Teil mechanisch befestigt werden kann. Die Dichtung ist derart ausgebildet und am ersten rohrförmigen Teil angebracht, dass sie bereits in nicht aufgequelltem Zustand nach der mechanischen Befestigung des zweiten rohrförmigen Teils am ersten rohrförmigen Teil eine initiale Dichtwirkung gegen das Austreten von in den rohrförmigen Teilen geführtem Wasser bzw. wässriger Lösung entfaltet. Die Dichtung ist schliesslich derart am ersten rohrförmigen Teil angebracht, dass sie von in den rohrförmigen Teilen geführtem Wasser bzw. wässriger Lösung kontaktiert wird und nach dem Erstkontakt aufquillt, so dass deren Dichtwirkung erhöht wird.

Zum dichten Verbinden des ersten rohrförmigen Teils mit dem zweiten rohrförmigen Teil des Leitungssystems werden also folgende Schritte durchgeführt:
a) in eine in mindestens einem der rohrförmigen Teile an einer in verbundenem Zustand das andere rohrförmige Teil kontaktierenden Fläche ausgesparte Ringnut wird eine Ringdichtung aus einem wasserquellbaren Dichtstoff eingebracht,
b) das zweite rohrförmige Teil wird mit dem ersten rohrförmigen Teil derart verschraubt, dass In verbundenem Zustand der eine rohrförmige Teil teilsweise vom anderen rohrförmigen Teil umschlossen ist, wobei durch das Verschrauben ein Gewinde des zweiten rohrförmigen Teils in die Ringdichtung einschneidet,
c) Wasser bzw. wässrige Lösung wird in die miteinander verbundenen rohrförmigen Teile elngeleitet, wobei das Wasser bzw. die wässrige Lösung die Ringdichtung kontaktiert, so dass diese aufquillt und somit ihre Dichtwirkung erhöht.

Der letzte Schritt c) entspricht einer ersten Inbetriebnahme des entsprechenden Abschnitts des Leitungssystems und kann sowohl vom Installateur (z. B. im Rahmen eines Tests) als auch später vom Benutzer vorgenommen werden. Weil die Verbindung von Anfang an dicht ist, ist es nicht notwendig, bei der ersten Inbetriebnahme besondere Massnahmen zu treffen.

Durch das Verschrauben des zweiten rohrförmigen Teils mit dem ersten rohrförmigen Teil wird also die aufquellbare Ringdichtung derart verformt und/oder bewegt, dass sie einen Raum zwischen den beiden rohrförmigen Teilen mit einer gewissen Vorspannung ausfüllt. Diese initiale Abdichtung vermag ein Austreten von Flüssigkeit bei der Erstbenutzung des entsprechenden Abschnitts des Leitungssystems zu verhindern, auch wenn die Flüssigkeit mit Druck in die Leitung eingebracht wird. Weil die Dichtung derart angeordnet ist, dass sie von in den rohrförmigen Teilen geführtem Wasser bzw. wässriger Lösung kontaktiert wird, quillt sie bei der Erstbenutzung sofort auf, d. h. hydrophile Gruppen im wasserquellbaren Material weiten sich auf und schaffen eine sichere und dauerhafte Abdichtung.

Die Verbindung kann auf einfache Weise hergestellt werden: Weder ist es nötig, ein zusätzliches Dichtmaterial (wie Hanf oder ein PTFE-Band) einzubringen, noch muss die Dichtung für die Initialabdichtung vorbereitet (z. B. mit Druckluft versorgt) werden, noch ist im Rahmen des Montageverfahrens ein zusätzlicher Schritt zum Einfüllen von aufquellbarem Material oder ein Einleiten des Quellvorgangs notwendig. Der Montagevorgang entspricht vielmehr demjenigen bei einer üblichen entsprechenden Verbindung oder ist gar vereinfacht. Das Anschlussstück kann einfach aufgebaut sein, weil nicht sowohl übliche Gummidichtungen als auch zusätzliche, aufquellbare Dichtungen notwendig sind.

Beim (radialen) Querschnitt der Ringdichtung bestehen vielerlei Gestaltungsmöglichkeiten. Die Form der Ringdichtung kann auf ihrer hinteren Seite insbesondere der Geometrie der Ringnut und auf ihrer vorderen, freien Seite der Geometrie des zu verbindenden rohrförmigen Gegenstücks angepasst sein. Auf der freien Seite können beispielsweise mehrere Wölbungen ausgebildet sein, wodurch die mechanische initiale Abdichtung bei bestimmten Geometrien verbessert werden kann.

Das Anschlussstück kann insbesondere Teil eines Verbindungsstücks (Fittings) sein, welches eine Verbindung zwischen verschiedenen Elementen des Leitungssystems (also z. B. zwischen zwei Rohren oder zwischen einem Rohr und einer Armatur) schaffen kann. Das Verbindungsstück kann aus verschiedenen Materialien gefertigt sein, z. B. aus Rotguss, Messing, Edelstahl oder auch Polyvinylidenfluorid (PVDF), Polyphenylsulfon (PPSU) oder Polyphthalamid (PPA).

Das Anschlussstück kann auch Teil einer Armatur mit Absperr-, Regel- und/oder Ventilfunktion sein. Die Armatur kann aus Metall, z. B. aus Messing, Rotguss oder Edelstahl, aber auch aus Kunststoff, z. B. aus Polypropylen (PP), Polyvinylchlorid (PVC) oder technischen Kunststoffen wie Polysulfon (PSU) gefertigt sein.

Der rohrförmige Teil des erfindungsgemässen Anschlussstücks kann mit einem rohrförmigen Teil einer Armatur, eines Fittings bzw. mit einem Rohr verbunden werden. Erfindungsgemässe Anschlussstücke lassen sich auch bei Rohren unterschiedlichsten Materials herstellen, also z. B. bei Metallrohren aus Edelstahl, Kupfer oder verzinktem Stahl, bei Kunststoffrohren aus Polyethylen (PE, PEX, PE-RT), Polypropylen (PP) oder Polybutylen (PB) oder bei Verbundrohren.

Die beiden rohrförmigen Teile werden durch eine Schraubverbindung miteinander verbunden, d. h. das erste rohrförmige Teil weist ein Innengewinde oder ein Aussengewinde auf, und das zweite rohrförmige Teil ist mit einem entsprechenden Aussengewinde bzw. Innengewinde versehen und somit mit dem ersten rohrförmigen Teil verschraubbar. Weil die Abdichtung nicht wie bei der Verwendung von Gewindebeschlchtungen, PTFE-Bändern oder Hanf im Bereich des Gewindes erfolgt, wird beim Zurückdrehen der Verbindung im Rahmen der Montage nicht die Dichtschicht beschädigt und auch ein Zurückdrehen von 180° oder mehr führt nicht zu einer Undichtigkeit.

Die Gewinde können In an sich bekannter Weise gemäss Norm ISO 7-1 ausgeführt sein, d. h. das Innengewinde ist zylindrisch, das Aussengewinde kegelig. Dies gewährleistet die Kompatibilität mit gängigen Rohren und Fittings. Weil die Dichtfunktion von der Ringdichtung wahrgenommen wird, ist es auch möglich, beide Gewinde zylindrisch auszuführen. Diese Variante vereinfacht die Befestigung der rohrförmigen Teile aneinander.

Grundsätzlich kann die Ringnut von der Mündung des ersten rohrförmigen Teils aus gesehen sowohl hinter als auch vor dem Bereich des Gewindes angeordnet sein. Die Ringnut kann auch im Gewindebereich selbst ausgespart sein, das Gewinde also unterbrechen.

Wenn das erste rohrförmige Teil ein Innengewinde aufweist, ist die Ringnut aber bevorzugt von der Mündung des ersten rohrförmigen Teils aus gesehen hinter dem Innengewinde ausgespart. In verbundenem Zustand befindet sich somit die Ringdichtung im Bereich der Mündung des zweiten rohrförmigen Teils, welche vom ersten rohrförmigen Teil umschlossen ist. Beim Durchleiten von Wasser oder von einer wässrigen Lösung kontaktiert diese zuverlässig die Ringdichtung und lässt diese aufquellen.

Wenn das erste rohrförmige Teil ein Aussengewinde aufweist, ist die Ringnut bevorzugt von einer Mündung des ersten rohrförmigen Teils aus gesehen vor dem Aussengewinde, also im Bereich der Mündung des ersten rohrförmigen Teils, ausgespart. Beim Durchleiten von Wasser oder von einer wässrigen Lösung durch die Verbindung des ersten rohrförmigen Teils mit dem zweiten rohrförmigen Teil kontaktiert diese zuverlässig die Ringdichtung und lässt diese aufquellen.

Ist das Aussengewinde kegelig ausgeführt (gemäss ISO 7-1), kann die Ringnut in einem mittleren Abschnitt des Aussengewindes ausgeführt sein, das Gewinde also unterbrechen. Dies gewährleistet auch in diesem Fall eine sichere Kontaktierung der Ringdichtung. Gleichzeitig ist die Abdichtung auch dann gewährleistet, wenn das rohrförmige Teil mit Innengewinde nicht vollständig auf das Aussengewinde aufgeschraubt wird.

Der Boden der Ringnut liegt tiefer als ein Grund des Gewindes des ersten rohrförmigen Teils. Dies ermöglicht die Anbringung der Ringnut sowohl vor als auch hinter dem Gewindeabschnitt, ohne dass das Zusammenwirken der beiden Gewinde behindert wird.

Die Ringdichtung ragt in unbefestlgtem Zustand der beiden rohrförmigen Teile über den Grund des Gewindes des ersten rohrförmigen Teils hinaus, und das Gewinde des zweiten rohrförmigen Teils ist derart angeordnet und ausgebildet, dass es beim Befestigen der beiden rohrförmigen Teile aneinander in die Ringdichtung einschneidet. Zwischen dem Gewinde und der Ringdichtung wird somit eine Art Labyrinth-Dichtung gebildet, durch den über den Grund des Gewindes hinaus ragenden Teil der Ringdichtung wird überdies beim Verschrauben der beiden rohrförmigen Teile in der Ringdichtung eine Vorspannung aufgebaut, welche eine mechanische initiale Abdichtung gewährleistet.

Um die Initialdichtung und auch die dauerhafte Abdichtung weiter zu steigern und um gegebenenfalls eine axiale und/oder Verdrehsicherung der Verbindung zu schaffen, kann der Dichtstoff einen mikroverkapselten Klebstoff umfassen, welcher mechanisch oder thermisch aktivierbar ist. Bei einer Pressverbindung kann die Aktivierung beispielsweise durch die Verpressung mechanisch erfolgen. Die thermische Aktivlerung des Klebers kann beispielsweise dadurch erfolgen, dass ein an die Ringdichtung angrenzendes Metallteil des Anschlussstücks induktiv erwärmt wird, so dass die Ringdichtung mittelbar durch das Metallteil erwärmt wird.

Der Dichtstoff kann in die Ringnut eingeformt sein, d. h. er wird bei der Herstellung als pastöse Masse in die Ringnut eingebracht und dort getrocknet und/oder gehärtet (bzw. vemetzt).

Der Dichtstoff kann aber auch separat zu einer ringförmigen Formdichtung verarbeitet und anschliessend als Ganzes in die Ringnut eingebracht werden. Je nach Geometrie ist es notwendig, dass die Formdichtung eine gewisse Elastizität aufweist, damit sie beispielsweise von der Mündung des rohrförmigen Teils bis in eine aussenliegende Ringnut geschoben werden kann. Im Rahmen der Fertigung der Formdichtung kann ein Vernetzungsvorgang stattfinden.

Aus der nachfolgenden Oetailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1A, 1B: Schematische Darstellungen einer ersten erfindungsgemässen Schraub- verbindung im Querschnitt in teilweise und vollständig verbundenem Zu- stand;
- Fig.2: eine schematische Querschnittsdarstellung einer zweiten erfindungsge- mässen Schraubverbindung; und
- Fig. 3: eine schematische Querschnittsdarstellung einer dritten erfindungsgemäs- sen Schraubverbindung.

Grundsätzlich sind in den Figuren gleiche Teile mit gleichen Bezugszeichen versehen.

### Wege zur Ausführung der Erfindung

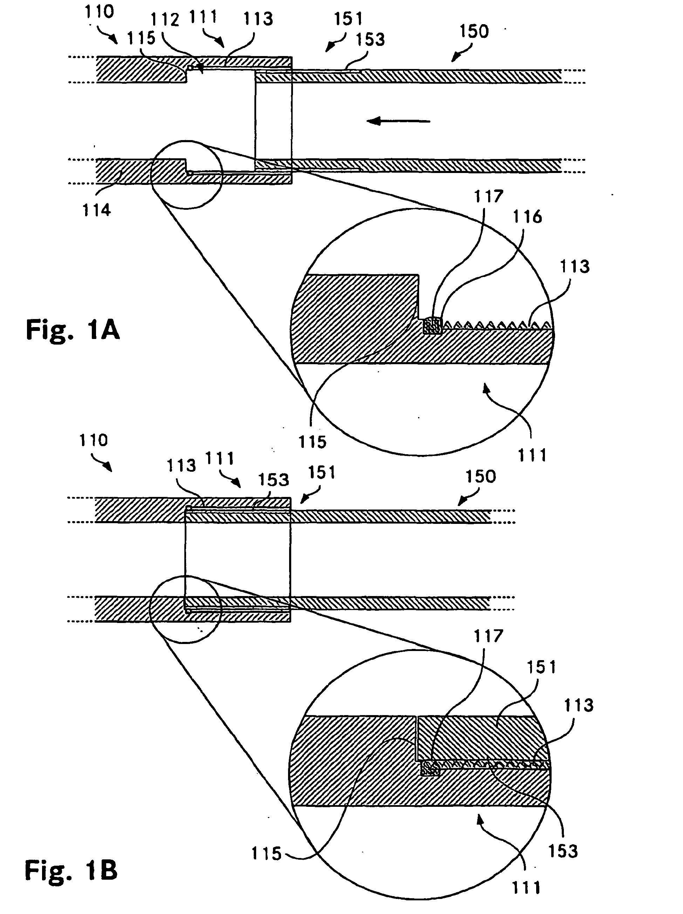

Die Figuren 1A und 1B sind schematische Darstellungen einer ersten erfindungsgemässen Schraubverbindung im Querschnitt in teilweise und vollständig verbundenem Zustand. dargestellt sind ein erstes Anschlussstück 111 eines ersten Bauelements 110, beispielsweise einer Armatur oder eines Fittings, sowie ein damit zu verbindendes zweites Anschlussstück 151 eines zweiten Bauelements 150, beispielsweise eines Rohrs. Das erste Anschlussstück 111 weist eine mit einem Innengewinde 113 versehene Aufnahme 112 auf. Der Innenquerschnitt der Aufnahme 112 ist geringfügig grösser als der Aussenquerschnitt des Anschlussstücks 151 des zweiten Bauelements 120 und ist auch grösser als der Innenquerschnitt des weiterführenden, rohrförmigen Abschnitts 114 des ersten Bauelements 110. Zwischen der Aufnahme 112 und dem weiterführenden, rohrförmigen Abschnitt 114 ist somit eine Stufe 115 ausgebildet.

Am Anschlussstück 151 des zweiten Bauelements 120 ist ein Aussengewinde 153 eingeschnitten, welches mit dem Innengewinde 113 der Aufnahme 112 des ersten Anschlussstücks 11 zusammenwirken kann. Das zweite Bauelement 150 kann also mit seinem Anschlussstück 151 voran in die Aufnahme 112 des ersten Bauelements 110 eingeschraubt werden, bis es an der Stufe 115 anschlägt, wodurch eine mechanisch feste Verbindung zwischen den Bauelementen 110, 150 geschaffen wird. Anschliessend an das Innengewinde 113 des ersten Anschlussstücks 111, vor der Stufe 115, ist eine ringförmige Nut 116 ausgebildet. Der Boden der Nut 116 liegt tiefer als der Grund des Innengewindes 113. In dieser Nut 116 ist eine ringförmige Dichtung 117 aus einem wasserquellbaren Material aufgenommen. Derartige Materialien sind bekannt: Geeignet ist beispielsweise ein in der EP 0 831 107 A1 (Sika AG) offenbarter Dichtstoff, welcher im Handel unter dem Namen SikaSwell® erhältlich ist und üblicherweise zum Abdichten von Arbeitsfugen oder Rohrdurchführungen im Baubereich (also für drucklose Anwendungen bzw. für Anwendungen mit geringem Druck) verwendet wird. In dem in der Figur 1A dargestellten teilweise verbundenen Zustand ragt die Dichtung 117 über die Innenfläche der Aufnahme 112 und somit auch über das Profil des Innengewindes 113 hinaus.

Beim Einschrauben des zweiten Bauelements 150 in die Aufnahme 112 des ersten Bauelements 110 schneidet das Aussengewinde 153 des zweiten Anschlussstücks 151 in die vorstehende Dichtung 117 ein und drückt sie gleichzeitig teilweise zusammen. Dadurch wird einerseits zwischen dem Gewindeprofil und der Dichtung 117 eine Art Labyrinthdichtung geschaffen, andererseits wird zwischen der Dichtung 117 und dem zweiten Anschlussstück 151 eine Vorspannung aufgebaut. Im Ergebnis kann die Dichtung 117 unmittelbar nach dem mechanischen Befestigen der beiden Anschlussstücke 111, 151 aneinander (siehe Figur 1 B) eine initale Dichtfunktion wahrnehmen und hält auch hohem Wasserdruck stand. Beim erstmaligen Durchleiten von Wasser (bzw. von einer wässrigen Lösung) durch die beiden Bauelemente 110, 150 gelangt dieses zwischen dem zweiten Bauelement 150 und der Stufe 115 zur Dichtung 117, worauf diese aufquillt und somit eine dauerhafte Abdichtung zwischen den beiden Bauelementen 110, 150 bildet.

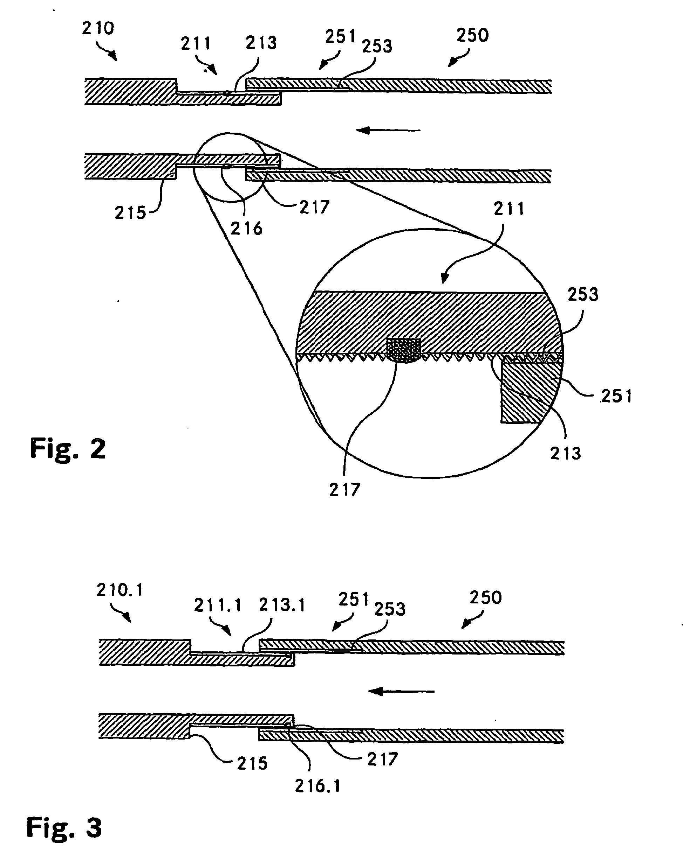

Die Figur 2 ist eine schematische Querschnittsdarstellung einer zweiten erfindungsgemässen Schraubverbindung. Im Unterschied zur in den Figuren 1A, 1B dargestellten Verbindung weist hier das erste Bauelement 210 (z. B. Armatur oder Fitting) ein kegeliges Aussengewinde 213 auf, während das zweite Bauelement 250 (z. B. ein Rohr) mit einem entsprechenden zylindrischen Innengewinde 253 versehen ist. Das mit dem Aussengewinde 213 versehene Anschlussstück 211 des ersten Bauelements 210 weist einen Aussenquerschnitt auf, welcher geringfügig kleiner ist als der Innenquerschnitt des Anschlussstücks 251 des zweiten Bauelements 250. Hinten anschliessend an den Gewindeabschnitt erweitert sich der Aussenquerschnitt des ersten Bauelements 210, so dass eine Stufe 215 gebildet wird. Ungefähr in der Mitte des Gewindeabschnitts ist eine ringförmige Nut 216 ausgebildet. In dieser ist wiederum eine ringförmige Dichtung 217 aus wasserquellbarem Material aufgenommen. Ihr Querschnitt ist derart, dass sie in unverbundenem Zustand des ersten Bauelements 210 über die Nut 216 herausragt.

Beim Aufschrauben des zweiten Bauelements 250 auf das Anschlussstück 211 des ersten Bauelements 210 schneidet das Innengewinde 253 des zweiten Anschlussstücks 251 in die vorstehende Dichtung 217 ein und drückt sie gleichzeitig teilweise zusammen. Dadurch wird auch hier zwischen dem Gewindeprofil und der Dichtung 217 eine Art Labyrinthdichtung geschaffen, und zwischen der Dichtung 217 und dem zweiten Anschlussstück 251 wird eine Vorspannung aufgebaut. Somit wird eine initiale Abdichtung geschaffen. Beim erstmaligen Durchleiten von Wasser (bzw. von einer wässrigen Lösung) durch die beiden Bauelemente 210, 250 gelangt dieses zwischen den beiden Teilen und den entsprechenden Abschnitten der Gewinde zur Dichtung 217, worauf diese aufquillt und eine dauerhafte Abdichtung zwischen den beiden Bauelementen 210, 250 ausbildet. Aufgrund der kegeligen Form des Aussengewindes 213 kann das Wasser relativ leicht entlang des mündungsnahen Abschnitts des Aussengewindes 213 zur Dichtung 217 gelangen, während der hintere Abschnitt des Aüssengewindes 213 mit seinem grösseren Aussendurchmesser zusätzlich zur Abdichtung beitragen kann. Die mittige Anordnung der Dichtung 217 gewährleistet, dass sie einerseits durch das Innengewinde 253 mechanisch zuverlässig kontaktiert wird, aber auch dann eine abdichtende Funktion wahrnehmen kann, wenn das zweite Bauelement 250 nicht vollständig auf das erste Bauelement 210 aufgeschraubt ist.

Die Figur 3 ist eine schematische Querschnittsdarstellung einer dritten erfindungsgemässen Schraubverbindung. Sie entspricht weitgehend der in der Figur 2 dargestellten Ausführungsform, im Folgenden wird deshalb nur auf die Unterschiede eingegangen: Anstelle eines kegellgen Aussengewindes ist ein zylindrisches Aussengewinde 213.1 am ersten Bauelement 210.1 vorhanden. Entsprechend ist die ringförmige Nut 216.1 vorne anschliessend an den Gewindeabschnitt, im Bereich der Mündung des rohrartigen Anschlussstücks 211.1 des ersten Bauelements 210.1 ausgebildet. In der Nut 216.1 ist wiederum eine ringförmige Dichtung 217 aus wasserquellbarem Material aufgenommen. Ihr Querschnitt ist derart, dass sie in unverbundenem Zustand des ersten Bauelements 210.1 über die Nut 216.1 herausragt.

Beim Aufschrauben des zweiten Bauelements 250 auf das Anschlussstück 211.1 des ersten Bauelements 210.1 schneidet das Innengewinde 253 des zweiten Anschlussstücks 251 in die vorstehende Dichtung 217 ein und drückt sie gleichzeitig teilweise zusammen. Dadurch wird auch hier zwischen dem Gewindeprofil und der Dichtung 217 eine Art Labyrinthdichtung geschaffen, und zwischen der Dichtung 217 und dem zweiten Anschlussstück 251 wird eine Vorspannung aufgebaut. Somit wird eine initiale Abdichtung geschaffen. Beim erstmaligen Durchleiten von Wasser (bzw. von einer wässrigen Lösung) durch die beiden Bauelemente 210.1, 250 gelangt dieses zwischen den beiden Bauelementen 210.1, 250 zur Dichtung 217, worauf diese aufquillt und eine dauerhafte Abdichtung zwischen den beiden Bauelementen 210.1, 250 ausbildet.

Die dargestellten Ausführungsformen lassen sich in vielerlei Hinsicht variieren und abwandeln. So können die einzelnen Bauelemente aus unterschiedlichen Materialien, insbesondere aus geeigneten Metallen, Kunststoffen oder Verbundwerkstoffen gefertigt werden. Je nach verwendetem Material und je nach Dimensionen der beteiligten Bauelemente, kann der Einsatz von Stütznippeln angezeigt sein oder nicht. Die Formen der Nippel, Hülsen oder Zonen können sich von den dargestellten unterscheiden. Die quellbare Dichtung kann auch in anderen axialen Positionen am jeweiligen Bauelement angeordnet sein, oder es sind an einem Bauelement zwei oder mehrere Dichtungen axial hintereinander angeordnet.

Die ringförmigen Dichtungen können ausserhalb des Bauelements hergestellt und schliesslich eingelegt werden, oder sie werden direkt in der Aufnahmenut geformt. Generell sind für die Dichtungen wasserquellbare Materialien verwendbar, welche den entsprechenden mechanischen Erfordernissen genügen, ein gewisse Elastizität aufweisen und biologisch nicht abgebaut werden. Das Profil der (einzulegenden) Dichtungen kann je nach Querschnitt der Nut, je nach Geometrie des anderen Bauelements und je nach Verbindungsprozess unterschiedlich gewählt werden.

Zusammenfassend ist festzustellen, dass durch die Erfindung ein Anschlussstück geschaffen wird, welches dauerhaft und dicht mit anderen Elementen des Leitungssystems verbindbar ist und welches eine einfache und schnelle Herstellung der Verbindung ermöglicht.

## Patentansprüche

1. Schraubverbindung', umfassend einen ersten rohrförmigen Teil (111; 211; 211.1) eines Anschlussstücks und einen zweiten rohrförmigen Teil (151; 251) eines Wasser oder wässrige Lösungen führenden Leitungssystems, wobei der erste rohrförmige Teil (111; 211; 211.1) mit dem zweiten rohrförmigen Teil (151; 251) dicht verbindbar ist, wobei
a) das erste rohrförmige Teil (111; 211; 211.1) ein Innengewinde (113) oder ein Aussengewinde (213; 213.1) aufweist, so dass das zweite rohrförmige Teil (151; 251) mit entsprechendem Aussengewinde (153) bzw. Innengewinde (253) mit dem ersten rohrförmigen Teil (111; 211; 211.1) verschraubbar ist²,
b) im ersten rohrförmigen Teil (111; 211; 211.1) an einer in verbundenem Zustand das zweite rohrförmige Teil (151; 251) kontaktierenden Fläche eine Ringnut (116; 216; 216.1) ausgespart ist; in welche' eine Ringdichtung (117; 217) aus einem wasserquellbaren Dichtstoff eingebracht ist, wobei ein Boden der Ringnut (116; 216; 216.1) tiefer liegt als ein Grund des Gewindes (113; 213; 213.1) des ersten rohrförmigen Teils (111; 211; 211.1)³,
c) die Ringdichtung (117; 217) in unbefestigtem Zustand der beiden rohrförmigen Teile (111, 151; 211, 251; 211.1, 251) über den Grund des Gewindes (113; 213; 213.1) des ersten rohrförmigen Teils (111; 211; 211.1) hinausragt und dass das Gewinde (153; 253) des zweiten rohrförmigen Teils (151; 251) derart angeordnet und äusgebildet ist, dass es beim Befestigen der beiden rohrförmigen Teile (111, 151; 211, 251; 211.1, 251) aneinander in die Ringdichtung (117; 217) einschneidet⁴,
d) das Anschlussstück derart ausgebildet ist, dass in nicht aufgequelltem Zustand der Dichtung (117; 217) das zweite rohrförmige Teil (151; 251) am ersten rohrförmigen Teil (111;211;211.1) mechanisch befestigt werden kann,
e) die Dichtung (117; 217) derart ausgebildet und am ersten rohrförmigen Teil (111; 211; 211.1) angebracht ist, dass sie bereits in nicht aufgequelltem Zustand nach der mechanischen Befestigung des zweiten rohrförmigen Teils (151; 251) am ersten rohrförmigen Teil (1.11; 211; 211.1) eine initiale Dichtwirkung gegen das Austreten von in den rohrförmigen Teilen (111; 211; 211.1 / 151; 251) geführtem Wasser bzw. wässriger Lösung entfaltet, und wobei
f) die Dichtung (117; 217) derart am ersten rohrförmigen Teil (111; 211; 211.1) angebracht ist, dass sie von in den rohrförmigen Teilen (111; 211; 211.1 / 151; 251) geführtem Wasser bzw. wässriger Lösung kontaktiert wird, und nach dem Erstkontakt aufquillt, so dass deren Dichtwirkung erhöht wird.

2. Schraubverbindung nach Anspruch 1, **dadurch gekennzeichnet, dass** das erste rohrförmige Teil (111) ein Innengewinde (113) aufweist und dass die Ringnut (116) von einer Mündung des ersten rohrförmigen Teils (111) aus gesehen hinter dem Innengewinde (113) ausgespart ist.

3. Schraubverbindung nach Anspruch 1, **dadurch gekennzeichnet, dass** das erste rohrförmige Teil (211) ein Aussengewinde (213) aufweist und dass die Ringnut (216) von einer Mündung des ersten rohrförmigen Teils (211) aus gesehen vor dem Aussengewinde (213) ausgespart ist.

4. Schraubverbindung nach einem der Ansprüche 1 bis 3, **dadurch gekennzeichnet, dass** der Dichtstoff einen mikroverkapselten Klebstoff umfasst, welcher mechanisch durch das Verpressen oder thermisch aktivierbar ist.

5. Schraubverbindung nach einem der Ansprüche 1 bis 4, **dadurch gekennzeichnet, dass** der Dichtstoff in die Ringnut eingeformt ist.

6. Schraubverbindung nach einem der Ansprüche 1 bis 5, **dadurch gekennzeichnet, dass** der Dichtstoff vernetzt und nach der Vernetzung als Formdichtung als Ganzes in die Ringnut eingebracht ist.

7. Schraubverbindung nach einem der Ansprüche 1 bis 6, **dadurch gekennzeichnet, dass** das Anschlussstück Teil eines Verbindungsstücks (Fitting) ist.

8. Schraubverbindung nach einem der Ansprüche 1 bis 6, **dadurch gekennzeichnet, dass** das Anschlussstück Tell einer Armatur ist.

9. Verfahren zum dichten Verbinden eines ersten rohrförmigen Teils (111; 211; 211.1) mit einem zweiten rohrförmigen Teil (151; 251) eines Wasser oder wässrige Lösungen führenden Leitungssystems, mit folgenden Schritten
a) in eine in mindestens einem der rohrförmigen Teile (111; 211; 211.1) an einer in verbundenem Zustand das andere rohrförmige Teil (151; 251) kontaktierenden Fläche ausgesparte Ringnut (116; 216; 216.1) wird eine Ringdichtung (117; 217) aus einem wasserquellbaren Dichtstoff eingebracht,
b) das zweite rohrförmige Teil (151; 251) wird mit dem ersten rohrförmigen Teil (111; 211; 211.1) derart verschraubt, dass in verbundenem Zustand der eine rohrförmige Teil teilweise vom anderen rohrförmigen Teil umschlossen ist, wobei durch das Verschrauben ein Gewinde des zweiten rohrförmigen Teils (151; 251) in die Ringdichtung (117; 217) einschneidet,
c) Wasser bzw. wässrige Lösung wird in die miteinander verbundenen rohrförmigen Teile (111; 211; 211.1 / 151; 251) eingeleitet, wobei das Wasser bzw. die wässrige Lösung die Ringdichtung (117; 217) kontaktiert, so dass diese aufquillt und somit ihre Dichtwirkung erhöht.

## Claims

1. Screwed fastening, comprising a first tubular part (111; 211; 211.1) of a connector and a second tubular part (151, 251) of a pipe system carrying water or aqueous solutions, wherein the first tubular part (111; 211; 211.1) can be connected in a sealed fashion to the second tubular part (151; 251), wherein
a) the first tubular part (111; 211; 211.1) has an internal thread (113) or an external thread (213; 213.1), with the result that the second tubular part (151; 251) can be screwed, by means of a corresponding external thread (153) or, respectively, internal thread (253), to the first tubular part (111; 211; 211.1),
b) in the first tubular part (111; 211; 211.1) an annular groove (116; 216; 216.1), in which an annular seal (117; 217) formed of a sealing substance which can swell in water is placed, is formed on a face which in the connected state makes contact with the second tubular part (151; 251), wherein a bottom surface of the annular groove (116; 216; 216.1) is positioned lower than a base of the thread (113; 213; 213.1) of the first tubular part (111; 211; 211.1),
c) the annular seal (117; 217) projects, in the unattached state of the two tubular parts (111, 151; 211, 251; 211.1, 251), beyond the base of the thread (113; 213; 213.1) of the first tubular part (111; 211; 211.1), and the thread (153; 253) of the second tubular part (151; 251) is arranged and embodied in such a way that when the two tubular parts (111, 151; 211, 251; 211.1, 251) are attached to one another said thread (153; 253) cuts into the annular seal (117; 217),
d) the connector is embodied in such a way that in the non-swelled state of the seal (117; 217) the second tubular part (151; 251) can be mechanically attached to the first tubular part (111; 211; 211.1),
e) the seal (117; 217) is embodied and attached to the first tubular part (111; 211; 211.1) in such a way that in the non-swelled state after the mechanical attachment of the second tubular part (151; 251) to the first tubular part (111; 211; 211.1), the seal (117; 217) exerts an initial sealing effect preventing water or aqueous solution, which is carried in the tubular parts (111; 211; 211.1/151; 251), from escaping, and where
f) the seal (117; 217) is provided on the first tubular part (111; 211; 211.1) in such a way that water or aqueous solution carried in the tubular parts (111; 211; 211.1/151; 251) is placed in contact and swells up after the first contact, with the result that its sealing effect is increased.

2. Screwed fastening according to Claim 1, **characterized in that** the first tubular part (111) has an internal thread (113), and **in that** the annular seal (116) is hollowed out behind the internal thread (113), viewed from a mouth of the first tubular part (111).

3. Screwed fastening according to Claim 1, **characterized in that** the first tubular part (211) has an external thread (213), and **in that** the annular seal (216) is hollowed out in front of the external thread (213), viewed from a mouth of the first tubular part (211).

4. Screwed fastening according to one of Claims 1 to 3, **characterized in that** the sealing substance comprises a micro-encapsulated adhesive which can be activated mechanically by the pressing or can be activated thermally.

5. Screwed fastening according to one of Claims 1 to 4, **characterized in that** the sealing substance is cast into the annular groove.

6. Screwed fastening according to one of Claims 1 to 5, **characterized in that** the sealing substance is cross-linked, and after the cross-linking it is introduced in its entirety as a moulded seal into the annular groove.

7. Screwed fastening according to one of Claims 1 to 6, **characterized in that** the connector is part of a connecting element (fitting).

8. Screwed fastening according to one of Claims 1 to 6, **characterized in that** the connector is part of a faucet.

9. Method for providing a sealed screwed connection of a first tubular part (111; 211; 211.1) to a second tubular part (151; 251) of a line system carrying water or aqueous solutions, having the following steps
a) an annular seal (117; 217) composed of a sealing substance which can swell in water is introduced into an annular groove (116; 216; 216.1) which is hollowed out in at least one of the tubular parts (111; 211; 211.1) on a surface which, in the connected state, makes contact with the other tubular part (151; 251),
b) the second tubular part (151; 251) is screwed to the first tubular part (111; 211; 211.1) in such a way that in the connected state the one tubular part is partially surrounded by the other tubular part, wherein a thread of the second tubular part (151; 251) cuts into the annular seal (117; 217) as a result of the screwing operation,
c) water or aqueous solution is introduced into the tubular parts (111; 211; 211.1/151; 251) which are connected to one another, wherein the water or the aqueous solution makes contact with the annular seal (117; 217) with the result that the latter swells up and therefore increases its sealing effect.

## Revendications

1. Connexion de vis avec une première partie tubulaire (111; 211; 211.1) d'une pièce de raccordement et une deuxième partie tubulaire (151; 251) d'un réseau de canalisation transportant de l'eau ou des solutions aqueuses, la première partie tubulaire (111; 211; 211.1) peut être raccordée à la deuxième partie tubulaire (151; 251), dans laquelle
a) la première partie tubulaire (111; 211; 211.1) présente un filet intérieur (113) ou un filet extérieur (213; 213.1), de telle manière que la deuxième partie tubulaire (151; 251) avec un filet extérieur (153) ou un filet intérieur (253) correspondant puisse être vissée sur la première partie tubulaire (111; 211; 211.1),
b) dans la première partie tubulaire (111; 211; 211.1), dans une surface en contact avec la deuxième partie tubulaire (151; 251) à l'état assemblé, est creusée une gorge annulaire (116; 216; 216.1), dans laquelle un joint d'étanchéité (117; 217) en matériau d'étanchéité gonflable à l'eau est installé, de telle manière qu'un fond de la gorge annulaire (116; 216; 216.1) soit situé plus profondément qu'un fond du filet (113; 213; 213.1) de la première partie tubulaire (111; 211; 211.1),
c) à l'état non fixé des deux parties tubulaires (111, 151; 211, 251; 211.1, 251), le joint d'étanchéité annulaire (117; 217) s'étend au-delà du fond du filet (113; 213; 213.1) de la première partie tubulaire (111; 211; 211.1) et le filet (153; 253) de la deuxième partie tubulaire (151; 251) est disposé et réalisé de telle manière que, lors de la fixation des deux parties tubulaires (111, 151; 211, 251; 211.1, 251) l'une sur l'autre, il s'enfonce dans le joint d'étanchéité annulaire (117; 217),
d) la pièce de raccordement est réalisée de telle manière que, à l'état non gonflé du joint d'étanchéité (117; 217), la deuxième partie tubulaire (151; 251) puisse être fixée mécaniquement à la première partie tubulaire (111; 211; 211.1),
e) le joint d'étanchéité (117; 217) est réalisé et installé sur la première partie tubulaire (111; 211; 211.1) de telle manière que, déjà à l'état non gonflé après la fixation mécanique de la deuxième partie tubulaire (151; 251) sur la première partie tubulaire (111; 211; 211.1), il déploie une action d'étanchéité initiale contre la sortie de l'eau ou de la solution aqueuse transportée dans les parties tubulaires (111; 211; 211.1 / 151; 251), et dans laquelle
f) le joint d'étanchéité (117; 217) est installé sur la première partie tubulaire (111; 211; 211.1) de telle manière qu'il soit en contact avec l'eau ou la solution aqueuse transportée dans les parties tubulaires (111; 211; 211.1 / 151; 251), et qu'il gonfle dès le premier contact, de telle manière que son action d'étanchéité soit accrue.

2. Connexion de vis selon la revendication 1, **caractérisée en ce que** la première partie tubulaire (111) présente un filet intérieur (113) et **en ce que** la gorge annulaire (116), vue d'une embouchure de la première partie tubulaire (111), est creusée derrière le filet intérieur (113).

3. Connexion de vis selon la revendication 1, **caractérisée en ce que** la première partie tubulaire (211) présente un filet extérieur (213) et **en ce que** la gorge annulaire (216), vue d'une embouchure de la première partie tubulaire (211), est creusée devant le filet extérieur (213).

4. Connexion de vis selon l'une quelconque des revendications 1 à 3, **caractérisée en ce que** le matériau d'étanchéité comprend une colle en microcapsules, qui peut être activée mécaniquement par le pressage ou thermiquement.

5. Connexion de vis selon l'une quelconque des revendications 1 à 4, **caractérisée en ce que** le matériau d'étanchéité est moulé dans la gorge annulaire.

6. Connexion de vis selon l'une quelconque des revendications 1 à 5, **caractérisée en ce que** le matériau d'étanchéité est réticulé et est installé, après la réticulation, comme joint d'étanchéité moulé monobloc dans la gorge annulaire.

7. Connexion de vis selon l'une quelconque des revendications 1 à 6, **caractérisée en ce que** la pièce de raccordement est partie d'un raccord (fitting).

8. Connexion de vis selon l'une quelconque des revendications 1 à 6, **caractérisée en ce que** la pièce de raccordement est partie d'une armature.

9. Procédé pour procurer un assemblage vissé étanche entre une première partie tubulaire (111; 211; 211.1) et une seconde partie tubulaire (151; 251) d'un réseau de canalisation transportant de l'eau ou des solutions aqueuses, comprenant les étapes suivantes :
a) on installe un joint d'étanchéité annulaire (117; 217) en un matériau d'étanchéité gonflable à l'eau dans une gorge annulaire (116; 216; 216.1) creusée dans au moins une des parties tubulaires (111; 211; 211.1) dans une face en contact avec l'autre partie tubulaire (151; 251), à l'état assemblé,
b) on visse la seconde partie tubulaire (151; 251) avec la première partie tubulaire (111; 211; 211.1), de telle manière que, à l'état assemblé, une partie tubulaire soit enveloppée par l'autre partie tubulaire, u filet de la seconde partie tubulaire (151; 251) s'enfonçant lors du vissage dans le joint d'étanchéité annulaire (117; 217),
c) on introduit de l'eau ou une solution aqueuse dans les parties tubulaires (111; 211; 211.1 / 151; 251) assemblées l'une à l'autre, l'eau ou la solution aqueuse étant en contact avec le joint d'étanchéité annulaire (117; 217), de telle manière que celui-ci gonfle et accroisse ainsi son action d'étanchéité.
